Europäisches Patentamt

European Patent Office

Office européen des brevets

(11) Numéro de publication: **0 027 851**
A1

# (12) DEMANDE DE BREVET EUROPEEN

(21) Numéro de dépôt: 80103969.4

(22) Date de dépôt: 10.07.80

(51) Int. Cl.³: **G 06 F 15/16,** G 06 F 13/00

(30) Priorité: **28.09.79 FR 7924578**

(43) Date de publication de la demande: 06.05.81
**Bulletin 81/18**

(84) Etats contractants désignés: **DE FR GB IT**

(71) Demandeur: **International Business Machines Corporation, Armonk, N.Y. 10504 (US)**

(72) Inventeur: **Ulmer, Siegfried Werner, Le Riou C Domaine du Loup, F-06800 Cagnes (FR)**

(74) Mandataire: **de Pena, Alain, COMPAGNIE IBM FRANCE Departement de Propriété Industrielle, F-06610 La Gaude (FR)**

(54) **Système pour commander la durée de l'intervalle de temps entre blocs de données dans un système de communication calculateur à calculateur.**

(57) Système pour commander la durée de l'intervalle de temps séparant les blocs de données transmis par le calculateur (1). Le canal (7) transfère le premier bloc à transmettre à l'unité de contrôle (2) qui le transmet sur la ligne (4) à travers le modem (3). Lorsque le bloc est transmis, l'unité (2) en informe le canal qui lui envoie une commande indiquant la durée de l'intervalle entre blocs. L'unité (2) initie des moyens de temporisation internes et envoie une information au canal (7) lorsque l'intervalle de temps s'est écoulé. Le canal (7) peut alors transmettre le second bloc à l'unité (2).

Application aux systèmes de communication.

ACTORUM AG

SYSTEME POUR CONTROLER LA DUREE DE L'INTERVALLE
DE TEMPS ENTRE BLOCS DE DONNEES DANS UN
SYSTEME DE  COMMUNICATION CALCULATEUR A
CALCULATEUR

Description

TITRE MODIFIÉ
voir page de garde

Domaine Technique

La présente invention concerne les systèmes de communication calculateur à calculateur dans lesquels les calculateurs échangent des blocs de données à grande vitesse à travers un support de transmission, et plus particulièrement un système pour contrôler la durée de l'intervalle de temps qui sépare deux blocs de données consécutifs émis par un calculateur.

Etat de la Technique

Dans les systèmes de communication de ce type, une station de données dite principale est reliée par un support de transmission à une ou plusieurs stations de données dites tributaires. Une station de données comprend généralement un calculateur relié au support de transmission par une unité frontale de communication telle que par exemple, une unité de contrôle de communication ou un processeur frontal. La station de données principale échange des blocs de données sucessifs avec la ou les station(s) de données tributaires.

Pour qu'on puisse obtenir un rendement optimal du système de communication, il est souhaitable que les blocs de données émanant de la station émettrice soient séparés par un intervalle de temps aussi court que possible, sans pour autant que l'espacement obtenu soit tel que le calculateur de la station de données réceptrice ne puisse traiter qu'une partie des blocs de données arrivant, de nombreux blocs étant alors perdus. Cela peut se produire, notamment, si le calculateur de la station réceptrice ne dispose pas de suffisamment de ressources en matière de mémoire tampon ou de suffisamment de cycles de l'unité de traitement pour

2    0027851

pouvoir traiter tous les blocs de données parce que, par exemple, il traite plusieurs applications simultanément. De nombreux blocs de données peuvent également être perdus si les calculateurs respectifs des stations émettrice et réceptrice fonctionnent à des vitesses différentes, par exemple s'il s'agit respectivement de calculateurs IBM 360 et IBM 370.

Dans l'art antérieur, pour obtenir un espacement adéquat des blocs de données consécutifs, on utilise les services de temporisation qu'offrent la plupart des calculateurs disponibles dans le commerce.

Toutefois, l'utilisation des services de temporisation du calculateur de la station de données émettrice présente deux inconvénients principaux. Le premier est que l'utilisation de ces services de temporisation exige un grand nombre de cycles de l'unité centrale de traitement. Le second inconvénient est que l'utilisation desdits services interdit celle de techniques hautes performances de transfert de données entre la mémoire principale et le canal du calculateur telles que la technique dite de chaînage des commandes.

Exposé de l'Invention

L'objet de l'invention est de fournir un système pour contrôler la durée de l'intervalle de temps séparant les blocs de données consécutifs émis par un calculateur dans un système de communication, qui ne nécessite pas l'utilisation des services de temporisation du calculateur et qui permet l'utilisation de la technique de chaînage dynamique des commandes.

D'une manière générale, dans le système de l'invention, le calculateur de la station émettrice envoie le premier bloc de données à l'unité frontale de communication qui lui est associée et qui le relie au support de transmission. Cette

0027851

unité frontale transmet ensuite ce premier bloc de données sur le support de transmission et informe ledit calculateur de ce fait. Le calculateur envoie alors à l'unité frontale une commande dite de Comptage dégressif qui indique la durée de l'intervalle de temps qui doit s'écouler avant la transmission du bloc de données suivant. L'unité frontale décode cette commande et initie des moyens de temporisation qui définissent un intervalle de temps dont la durée est égale à celle indiquée par la commande Comptage dégressif. Lorsque cet intervalle de temps s'est écoulé, l'unité frontale en informe le calculateur qui lui envoie alors le deuxième bloc de données à transmettre.

Selon un mode de réalisation de l'invention, la commande Comptage dégressif est contenue dans un mot de commande du canal et spécifie la durée de l'intervalle de temps qui doit s'écouler entre blocs de données consécutifs.

Selon un autre mode de réalisation de l'invention, la commande Comptage dégressif est incluse dans un mot de commande du canal qui contient en outre l'adresse de la mémoire principale du calculateur à laquelle se trouve stocké le nombre d'unités de temps définissant l'intervalle séparant les blocs. Le canal envoie à l'unité frontale la commande Comptage dégressif et le nombre d'unités de temps fourni par la mémoire principale.

Selon un autre mode de réalisation de l'invention, lorsque le calculateur désire envoyer N blocs de données et que seulement n zones de la mémoire principale dans lesquelles sont emmmagasinés les n premiers blocs de données, $2 \leq n < N$ sont disponibles, les autres blocs de données étant stockés dans une unité de mémoire externe, il transmet à l'unité frontale le premier bloc de données à transmettre puis la commande Comptage dégressif. Lorsque le calculateur est informé par l'unité frontale que l'intervalle de temps spécifié par la commande Comptage dégressif s'est écoulé, il transmet le

4 **0027851**

second bloc de données à l'unité frontale et fait transférer le (n+1)$^{\text{ième}}$ bloc de données de l'unité de mémoire externe à la zone de la mémoire principale libérée par la transmission du premier bloc de données. Les autres blocs de données stockés dans l'unité de mémoire externe sont successivement transférés dans les zones ainsi libérées de la mémoire principale et envoyés à l'unité frontale pour transmission de façon similaire.

D'autres objets, caractéristiques et avantages de la présente invention ressortiront mieux de l'exposé qui suit, fait en référence aux dessins annexés à ce texte, qui représentent divers modes de réalisation préférés de celle-ci.

### Brève Description des Figures

La figure 1 représente une station de données incorporant l'invention.

La figure 2 représente le format d'une instruction Départ E/S.

La figure 3 représente le format d'un mot de commande du canal (CCW).

La figure 4 représente le format d'un mot d'adresse du canal (CAW).

La figure 5 représente le format d'un mot d'état du canal (CSW).

La figure 6 représente un exemple de réalisation du canal 7 de la figure 1.

La figure 7 représente un exemple de réalisation de l'unité de contrôle 2 de la figure 1.

## Modes de Réalisation de l'Invention

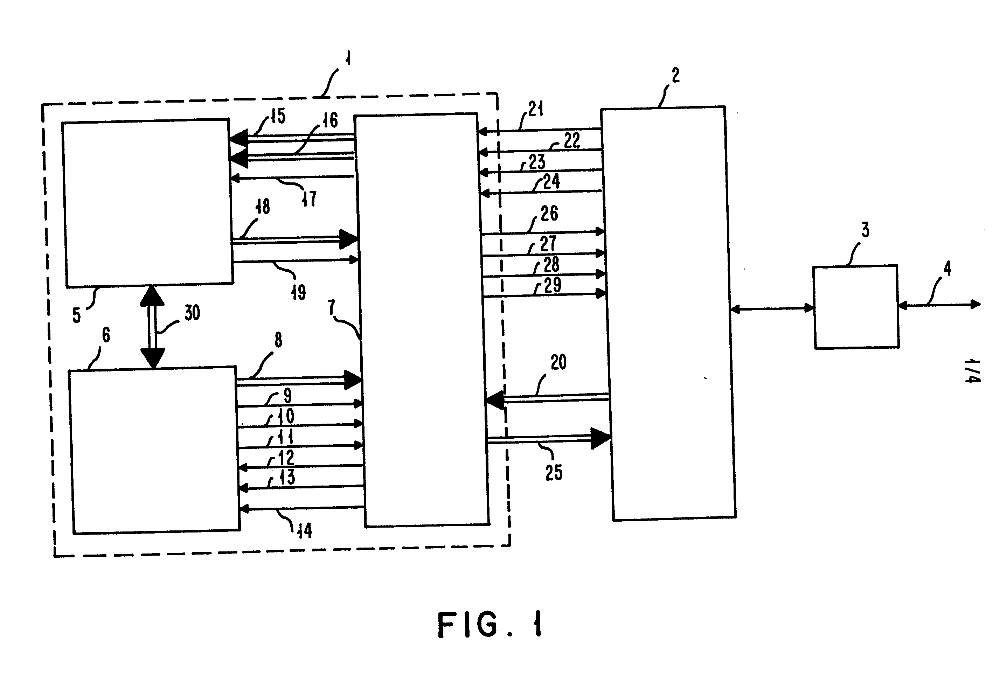

La figure 1 représente schématiquement une station de données incorporant l'invention. Elle comprend un calculateur 1, une unité frontale de communication 2 qui, dans l'exemple de réalisation décrit est une unité de contrôle de communication, et un modem 3 qui relie la station de données au support de transmission qu'on a représenté sur la figure par une ligne de transmission 4. Le calculateur 1 peut être un calculateur IBM 360 ou IBM 370 et on n'a représenté sur la figure que les éléments aidant à la description de l'invention. Ces éléments sont une mémoire principale 5, une unité centrale de traitement (CPU) 6 et un canal 7.

L'unité centrale de traitement 6 contient des moyens d'adressage de la mémoire principale, de recherche et de stockage des informations, de traitement arithmétique et logique des données, de mise en séquence des instructions dans l'ordre voulu et d'initialisation des communications entre la mémoire principale et les unités externes qui lui sont attachées.

Le canal 7 contrôle le transfert des données entre la mémoire principale 5 et les stations de données éloignées reliées à la station de la figure 1 par la ligne de transmission 4. Le canal 7 est relié à l'unité centrale de traitement de données 6, à la mémoire principale 5, et à l'unité de contrôle 2.

Le canal décharge l'unité centrale de traitement de la tâche de communiquer directement avec les stations de données éloignées, et permet au traitement des données dans le calculateur 1 de se dérouler en même temps que les opérations d'entrée-sortie.

Les opérations d'entrée-sortie permettent la circulation des informations entre la mémoire principale et les stations de données éloignées. L'unité de contrôle 2 commande les échanges de données entre la station de la figure 1 et les stations éloignées. Elle comprend les circuits logiques et les mémoires intermédiaires nécessaires auxdits échanges de données.

Le modem 3 convertit les impulsions de données fournies par l'unité de contrôle 2 en signaux susceptibles d'être transmis sur le support de transmission, et vice-versa.

Dans la description qui suit, on ne décrira ni l'unité centrale de traitement 6 ni la mémoire principale 5 qui peuvent être constituées, par exemple, par les unités correspondantes utilisées dans le calculateur IBM 360 ou IBM 370, et qui sont abondamment décrites dans la littérature.

Le canal 7 est relié à l'unité centrale de traitement 6, à la mémoire principale 5 et à l'unité de contrôle 2 par divers bus et lignes de commande. Dans un but de clarté, on n'a représenté sur la figure 1 que les bus et les lignes de commande utiles à la description de l'invention.

LIAISONS ENTRE LE CANAL ET LE CPU

Du CPU vers le canal.

Bus d'adresse 8 :
   Ce bus est utilisé pour fournir l'adresse du dispositif d'entrée-sortie sélectionné.

Ligne "Départ" 9 :
   Cette ligne est utilisée pour indiquer le démarrage d'une opération d'entrée-sortie.

Ligne "Sélection du canal" 10 :
   Cette ligne est utilisée pour provoquer le démarrage d'une opération d'entrée-sortie par le canal.

Ligne "Interruption" 11 :

    Cette ligne est utilisée pour provoquer une interruption de l'opération d'entrée-sortie en cours.

Du canal vers le CPU

Lignes de condition 12 et 13 :

    Elles sont utilisées pour indiquer les conditions du canal.

Ligne "Demande d'interruption" 14 :

    Cette ligne est utilisée pour indiquer au CPU que le canal demande une interruption de l'opération d'entrée-sortie en cours.

## LIAISONS ENTRE LE CANAL ET LA MEMOIRE PRINCIPALE.

Du canal vers la mémoire principale.

Bus 15 :

    Bus d'adresse de mémoire.

Bus 16 :

    Bus d'entrée des données en mémoire.

Ligne "Demande d'Ecriture" 17 :

    Cette ligne est utilisée pour indiquer que le canal demande que lui soit transféré le contenu de la position adressée par le bus 15.

De la mémoire principale vers le canal.

Bus 18 :

    Bus de sortie des données en mémoire.

Ligne "Acceptation d'Adresse" 19 :

Cette ligne est utilisée pour indiquer que l'adresse sur le bus 15 a été acceptée.

LIAISONS ENTRE LE CANAL ET L'UNITE DE CONTROLE.

De l'unité de contrôle vers le canal.

Bus 20 :

Bus d'entrée du canal.

Ligne "Entrée disponible" 21 :

Cette ligne est utilisée pour indiquer que l'unité de contrôle est sélectionnée et communique avec le canal.

Ligne "Entrée d'adresse" 22 :

Cette ligne est utilisée pour indiquer que l'unité de contrôle a placé une adresse sur le bus 20.

Ligne "Entrée d'état" 23 :

Cette ligne est utilisée pour indiquer que l'unité de contrôle a placé une information d'état sur le bus 20.

Ligne "Entrée de service" 24 :

Cette ligne est utilisée pour signaler au canal que l'unité de contrôle désire transmettre ou recevoir un octet.

Du canal vers l'unité de contrôle.

Bus 25 :

Bus de sortie du canal.

Ligne "Sortie de commande" 26 :

Cette ligne est utilisée pour indiquer que le canal a placé une commande sur le bus 25.

Ligne "Sortie d'adresse" 27 :

Cette ligne est utilisée pour indiquer que le canal a placé une adresse sur le bus 25.

Ligne "Sortie de service" 28 :

Cette ligne est utilisée pour indiquer que le canal a accepté l'information sur le bus 20 ou a fourni sur le bus 25 l'information demandée par la ligne Entrée de service.

Ligne "Sortie de sélection" 29 :

Cette ligne est utilisée pour sélectionner l'unité de contrôle.

## LIAISONS ENTRE LE CPU ET LA MEMOIRE PRINCIPALE.

Ces liaisons ne sont pas utiles pour la description de l'invention et ont été représentées par un bus bidirectionnel 30.

Avant de décrire la constitution détaillée et le fonctionnement de la station de la figure 1, il est préférable de décrire brièvement les formats des instructions et des mots de contrôle utilisés.

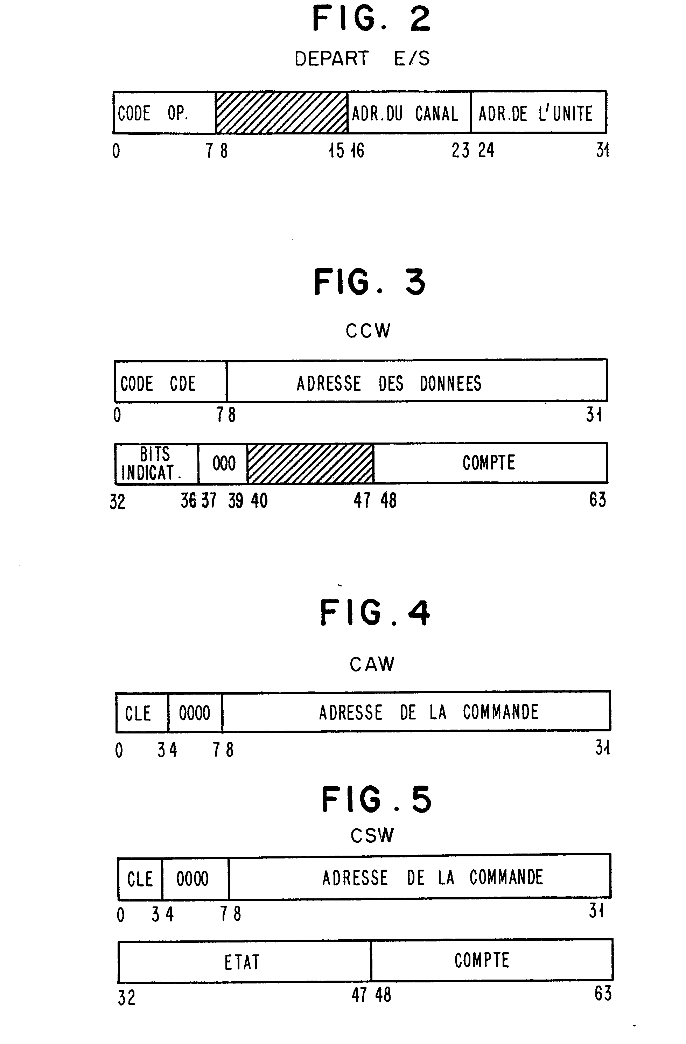

La figure 2 représente le format de l'instruction Départ E/S par laquelle l'unité centrale de traitement initie une opération d'entrée-sortie.

L'instruction Départ E/S a 32 bits.

Les bits 0 à 7 définissent le code opération qui spécifie l'instruction Départ E/S.

Les bits 8 à 15 sont ignorés.

Les bits 16 à 23 contiennent l'adresse du canal, tandis que

**0027851**

les bits 24 à 31 identifient l'unité de contrôle et la station éloignée adressée.

La figure 3 représente le format d'un mot de commande du canal. Ce mot de 64 bits, appelé CCW, spécifie la commande à exécuter; s'il s'agit de commandes initialisant des opérations d'entrée-sortie, il désigne la zone de mémoire associée à l'opération et indique les mesures qui devront être prises après achèvement du transfert de données à destination ou en provenance de cette zone.

Les fonctions attribuées aux différents champs du CCW sont les suivantes:

Code commande : Les bits 0 à 7 indiquent l'opération à exécuter.

Adresse des données : Les bits 8 à 31 indiquent l'adresse d'un octet en mémoire principale. C'est la première position de mémoire de la zone indiquée par le CCW.

Bit indicateur de chaînage de données (CD) : Si le bit 32 est à 1, les données sont chaînées. La zone de mémoire indiquée par le CCW suivant sera alors utilisée avec l'opération en cours.

Bit indicateur de chaînage des commandes (CC) : Si le bit 33 est à 1, et si le bit 32 est à 0, les commandes sont chaînées. L'opération spécifiée par le code commande du CCW suivant est alors déclenchée automatiquement dès que l'opération en cours s'est achevée normalement.

Bit indicateur de suppression d'indication de longueur (SLI): Le bit 34 contrôle si une condition de longueur incorrecte doit ou non être signalée au programme. Si ce bit est à 1, et si le bit CD (chaînage de données) est à 0, dans le dernier CCW utilisé, l'indication de longueur incorrecte est

**0027851**

supprimée. Quand les bits CC et SLI sont égaux à 1, le chaînage de commandes a lieu sans tenir compte de la présence d'une condition de longueur incorrecte.

Bit indicateur de saut (SAUT) : Lorsque ce bit (bit 35) est à 1, le transfert d'informations vers la mémoire, au cours d'une opération de lecture, lecture arrière, ou analyse, est supprimé.

Bit indicateur d'interruption contrôlée par le programme (PCI) : Si ce bit (bit 36) est à 1, le canal génère une condition d'interruption lorsque le CCW prend le contrôle du canal. Si ce bit est à 0, l'opération a lieu normalement.

Compte : Les bits 48 à 63 indiquent le nombre de positions d'octets (8 bits) que comporte la zone de mémoire désignée par le CCW.

Les positions de bit 37 à 39 contiennent des zéros. Le contenu des positions de bit 40 à 47 est ignoré.

La figure 4 représente le format du mot d'adresse du canal (CAW). Ce mot indique la clef de protection et l'adresse du premier CCW associé à l'instruction Départ E/S. Il est emmagasiné à une adresse fixe dans la mémoire principale.

Les fonctions affectées aux différents champs du CAW sont les suivantes:

Clé de protection : Les bits 0 à 3 constituent la clé de protection valable pour toutes les commandes associées à l'instruction Départ E/S. Cette clé est comparée à une clé mémoire chaque fois qu'il est fait référence à une zone de mémoire centrale.

Adresse de la commande : Les bits 8 à 31 indiquent la position du premier CCW dans la mémoire principale.

**0027851**

La figure 5 représente le format du mot d'état du canal. Le mot d'état du canal (CSW) fournit au programme l'état d'une unité d'entrée-sortie ou les conditions dans lesquelles une opération d'entrée-sortie a été arrêtée. Le CSW est formé, ou certaines de ses parties sont remplacées, notamment au cours des interruptions d'entrée-sortie et pendant l'exécution de Départ E/S. Le CSW est placé en mémoire principale à une adresse fixe et est disponible pour le programme à cette adresse jusqu'au moment où l'interruption d'entrée-sortie suivante se produit, ou jusqu'à ce qu'une autre instruction d'entrée-sortie provoque le remplacement de son contenu.

La signification des différents champs du CSW est la suivante:

Clé de protection : Les bits 0 à 3 forment la clé de protection mémoire utilisée dans la chaîne d'opérations.

Adresse de la commande : Les bits 8 à 31 forment l'adresse, qui est supérieure de huit à l'adresse du dernier CCW utilisé.

Etat : Les bits 32 à 47 identifient les conditions qui, dans l'unité et le canal, ont provoqué la mise en mémoire du CSW.

Compte : Les bits 48 à 63 forment le compte résiduel pour le dernier CCW utilisé.

Les formats décrits en référence aux figures 2 à 5 sont ceux utilisés par les calculateurs IBM 360 et IBM 370 et on pourra se référer au document public IBM : "IBM System 370 - Principles of Operation", référence GA22-7000-5, No. S/370-01, pour en obtenir tous les détails.

On décrira maintenant le fonctionnement de la station de données incorporant l'invention illustrée sur la figure 1. L'invention concerne un système pour contrôler la durée de l'intervalle de temps séparant deux blocs de données consécutifs émis par une station donnée; on ne décrira donc que le fonctionnement en mode émission de la station de la figure 1.

Le fonctionnement en mode émission correspond à l'opération d'entrée-sortie écriture. On décrira tout d'abord un premier mode de réalisation de l'invention.

On suppose que le programme d'application en cours d'exécution dans le calculateur 1 désire transmettre deux blocs de données de la mémoire principale 5 à une station de données éloignée. Chaque bloc de données comprend un nombre prédéterminé d'octets et est stocké dans une zone de la mémoire principale.

Le programme d'application inscrit les informations nécessaires à la transmission du premier bloc de données et à la durée minimale de l'intervalle de temps qui doit séparer les deux blocs de données dans deux mots de commande du canal que l'on désignera par CCW1 et CCW2. Ces informations sont les suivantes:

CCW1

| | | |
|---|---|---|
| Code commande | : | code écriture. |
| Adresse des données | : | Adresse de la première position de la zone de mémoire contenant le premier bloc de données à transmettre. |
| Bit indicateur CD | : | 0 |
| Bit indicateur CC | : | 1 |
| Bit indicateur SLI | : | 1 |
| Bit indicateur SAUT | : | Ignoré |
| Bit indicateur PCI | : | 0 |
| Compte | : | Nombre de positions d'octets que compte la zone contenant le premier bloc de données à transmettre. |

14   0027851

CCW2

| | | |
|---|---|---|
| Code commande | : | Le programme d'application inscrit ici le code d'une commande que l'on désignera par commande Comptage dégressif (CDC) qui est utilisée pour indiquer la durée de l'intervalle de temps qui doit séparer le premier bloc du second bloc. Dans le premier mode de réalisation de l'invention ce code (CDC) peut être, par exemple, le code AA AA AA 11 dans lequel les deux derniers bits à 1 indiquent qu'il s'agit d'une commande CDC et les six bits A représentent le nombre d'unité de temps que doit comprendre l'intervalle de temps entre blocs. Dans la suite de la description on désignera cette commande Comptage dégressif par le terme commande Comptage dégressif du premier type. |
| Adresse des données | : | Ignorée. |
| Bit indicateur CD | : | 0 |
| Bit indicateur CC | : | 0 |
| Bit indicateur SLI | : | 1 |
| Bit indicateur SAUT | : | Ignoré |
| Bit indicateur PCI | : | 0 |
| Compte | : | 1 |

Le programme d'application inscrit l'adresse du canal, celle de l'unité de contrôle, et celle de la station éloignée dans l'instruction Départ E/S, l'adresse du CCW1 dans le champ d'adresse du mot d'adresse du canal CAW, et transfère le contrôle des opérations au programme superviseur qui initie la transmission du premier bloc en exécutant une instruction Départ E/S. En réponse à cette instruction, le CPU 6 lève les lignes de commande Départ 9 et Sélection du canal 10 et place sur le bus d'adresse 8 l'adresse contenue dans l'instruction Départ E/S. Le canal 7 détecte l'état des lignes 9 et 10 et, s'il est occupé, en informe le CPU 6 en plaçant un code condition approprié sur les lignes de condition 12 et 13.

Si le canal est disponible, il emmagasine l'adresse disponible sur le bus d'adresse 8 et demande à la mémoire principale de lui transmettre le CAW en levant la ligne Demande d'écriture 17 et en plaçant l'adresse du CAW sur le bus d'adresse de mémoire 15. La mémoire principale 5 place le CAW sur le bus 18 et lève la ligne Acceptation 19. Le canal emmagasine l'adresse du CCW1 contenue dans le CAW dans un registre d'adresse de commande. Le canal demande alors à la mémoire principale 5 de lui transférer le CCW1 en levant la ligne Demande d'écriture 17 et en plaçant l'adresse du CCW1 sur le bus 15. La mémoire principale 5 transfère le CCW1 au canal qui emmagasine les champs Adresse des données, Bits indicateurs et Compte dans des registres appropriés et qui incrémente de huit unités l'adresse stockée dans son registre d'adresse de commande.

Le canal 7 envoie l'adresse d'unité qu'il a reçue du CPU 6 à l'unité de contrôle en la plaçant sur le bus de sortie 25 et en levant les lignes Sortie d'adresse 27 et Sortie de sélection 29. L'unité de contrôle 2 détecte l'état des lignes 27 et 29, décode l'adresse d'unité et si elle l'accepte, lève les lignes Entrée disponible 21 et Entrée d'adresse 22 et place l'adresse d'unité sur le bus d'entrée 20. Le canal compare l'adresse d'unité qu'il reçoit de l'unité de contrôle avec celle qu'il a reçu du CPU et si elles sont identiques, il transmet le code de commande du CCW1 à l'unité de contrôle 2 en le plaçant sur le bus de sortie 25 et en levant

**0027851**

la ligne Sortie de commande 26. Si l'unité de contrôle accepte la commande, elle lève la ligne Entrée d'état 23 et place sur le bus d'entrée 20 l'état zéro. En réponse, le canal libère le CPU en plaçant le code de condition approprié sur les lignes de condition 12 et 13.

La transmission du premier bloc de données commence. Si la procédure de transmission utilisée est la procédure connue sous la désignation "Procédé de commande à haut niveau "(en anglais: HDLC Procedure") l'unité de contrôle, lorsqu'elle reconnaît la commande d'écriture, place la séquence de délimitation de trame sur la ligne de transmission. L'unité de contrôle demande alors au canal le premier octet du premier bloc à transmettre en levant la ligne Entrée de service 24. En réponse, le canal lève la ligne Demande d'écriture 17, place sur le bus l'adresse de mémoire 15, l'adresse des données contenue dans le CCW1, incrémente cette adresse d'une unité et diminue le contenu de son registre de compte d'une unité. La mémoire principale place le premier octet sur le bus de sortie des données 18 et le canal le retransmet à l'unité de contrôle par le bus de sortie 25 et lève la ligne Sortie de service 28. L'unité de contrôle transmet cet octet puis demande le deuxième octet au canal et ainsi de suite jusqu'à ce que le contenu du registre de compte du canal atteigne la valeur zéro. A ce moment là, lorsque l'unité de contrôle lève la ligne Entrée de service 24, le canal en réponse lève la ligne Sortie de commande 26, ce qui indique une condition d'arrêt à l'unité de contrôle. L'unité de contrôle transmet alors successivement sur la ligne de transmission les séquences de contrôle de trame et de délimitation de trame prévues par la procédure HDLC, lève la ligne Entrée d'état 23 et place sur le bus d'entrée les conditions Fin sur canal et Fin sur unité. Le canal vérifie alors la valeur du bit indicateur CC du CCW1 et comme celui-ci a la valeur 1 qui indique le chaînage des commandes, il demande à la mémoire principale de lui transférer le CCW2 dont l'adresse est contenue dans le registre d'adresse de commande du canal.

La mémoire principale 5 transmet le CCW2 au canal qui le stocke et sélectionne l'unité de contrôle 2 comme décrit plus haut. Le canal transfère le code de commande du CCW2 à l'unité de contrôle qui le décode, reconnaît qu'il s'agit d'une commande Comptage dégressif du premier type et charge les six bits A du code de commande dans un compteur dégressif. Le contenu de ce compteur est diminué progressivement à un rythme prédéterminé et lorsqu'il atteint la valeur zéro, l'unité de contrôle lève la ligne Entrée d'état 23 et place sur le bus d'entrée 20 les conditions Fin sur canal et Fin sur unité. En réponse, le canal vérifie le bit indicateur CC du CCW en cours, c'est-à-dire du CCW2, et comme ce bit a la valeur 0, il demande une interruption d'entrée-sortie à l'unité centrale de traitement 6 en levant la ligne Demande d'interruption 14, et attend que l'unité centrale de traitement 6 lève la ligne Interruption 11. Le canal place alors sur le bus d'entrée des données en mémoire 16 les conditions dans lesquelles l'opération a été arrêtée pour inscription dans le mot d'état du canal CSW.

Le contrôle des opérations est passé au programme superviseur qui détermine quel est le programme d'application qui a demandé l'opération d'entrée-sortie qui vient de s'achever, et qui passe le contrôle à ce programme d'application. Celui-ci initie alors la transmission du deuxième bloc de données qui s'effectue de façon identique à celle du premier bloc de données.

La description faite ci-dessus du fonctionnement du premier mode de réalisation de l'invention montre comment contrôler la durée de l'intervalle de temps séparant deux blocs de données consécutifs transmis. On décrira maintenant le fonctionnement d'un deuxième mode de réalisation de l'invention dans lequel aucune interruption n'a lieu après la transmission du premier bloc de données.

0027851

On suppose que, comme dans le premier mode de réalisation, le programme d'application désire transmettre deux blocs de données de la mémoire principale à une station éloignée. Le programme d'application inscrit les informations nécessaires à la transmission de ces deux blocs dans quatre mots de commande du canal que l'on désignera par CCW1 à CCW4.

Ces informations sont les suivantes:

CCW1

| | | |
|---|---|---|
| Code commande | : | Code écriture |
| Adresse des données | : | Adresse de la première position de mémoire contenant le premier bloc de données. |
| Bit indicateur CC | : | 1 |
| Autres bits indicateurs | : | Comme CCW1 du premier mode de réalisation. |
| Compte | : | Nombre de positions d'octets que compte la zone contenant le premier bloc de données. |

CCW2

| | | |
|---|---|---|
| Code commande | : | Code Comptage dégressif: AA AA AA 11 |
| Adresse des données | : | Ignorée |
| Bit indicateur CC | : | 1 |
| Autres bits indicateurs et compte | : | Comme CCW2 du premier mode de réalisation. |

CCW3

| | | |
|---|---|---|
| Code commande | : | Code écriture |
| Adresse des données | : | Adresse de la première position de la zone contenant le deuxième bloc de données. |

CCW3 (suite)

    Bit indicateur :    1
    CC

    Autres bits     :    Comme CCW1 du premier mode de
    indicateurs          réalisation.

    Compte           :    Nombre de positions d'octets que
                         compte la zone contenant le deu-
                         xième bloc de données.

CCW4

    Code commande    :    Code Comptage dégressif.
    Adresse des      :    Ignorée
    données

    Autres bits     :    Comme CCW2 du premier mode de
    indicateurs
    et compte            réalisation.

La transmission du premier bloc de données s'effectue comme dans le premier mode de réalisation. Lorsque le canal reçoit les conditions Fin sur canal et Fin sur unité de l'unité de contrôle à l'expiration du comptage spécifié par la commande Comptage dégressif du CCW2, il vérifie l'état du bit indicateur CC du CCW2, et comme ce bit a la valeur 1, il demande à la mémoire centrale de lui transférer le CCW3. L'exécution des CCW3 et CCW4 par le canal est identique à celle des CCW1 et CCW2 du premier mode de réalisation, et se traduit par la transmission du deuxième bloc de données.

Dans les deux premiers modes de réalisation de l'invention dont le fonctionnement a été décrit, le nombre d'unité de temps de la commande Comptage dégressif était indiqué par le code de la commande elle-même. Selon un troisième mode de réalisation de l'invention le nombre d'unités de temps est stocké dans la mémoire principale.

On suppose, par exemple, que comme dans le premier mode de réalisation de l'invention, le programme d'application désire transmettre deux blocs de données. Le programme d'application inscrit les informations nécessaires à la transmission du premier bloc de données et à la données de l'intervalle entre blocs des deux mots de commande du canal, CCW1 et CCW2, comme indiqué ci-dessous:

CCW1                :    comme dans le premier mode de réalisa-
                         tion de l'invention.


CCW2

    Code commande   :    Code de la commande Comptage dé-
                         gressif. Dans ce mode de réalisa-
                         tion de l'invention, ce code peut
                         être par exemple le suivant:
                         MM MM MM 01
                         Dans la suite de la description on
                         désignera cette commande Comptage
                         dégressif par le terme commande
                         Comptage dégressif du deuxième
                         type.

    Adresse des     :    Adresse de la première position de
    données              la zone contenant le nombre d'uni-
                         tés de temps de l'intervalle entre
                         blocs.

    Bits            :    tous à zéro
    indicateurs

    Compte          :    Nombre de positions d'octets défi-
                         nissant le nombre d'unités de
                         temps.


Le CCW1 est exécuté par le canal comme dans le premier mode de réalisation de l'invention. Lorsque le CCW2 est transféré de la mémoire principale au canal, celui-ci transfère le code de commande du CCW2 à l'unité de contrôle. Celle-ci reconnaît qu'il s'agit d'une commande Comptage dégressif du deuxième type et demande au canal les octets définissant le nombre d'unités de temps de la mémoire principale. Le canal demande à la mémoire principale de lui transférer le contenu des adresses spécifiées par les bits du champ Adresse des données et du champ Compte du CCW2. Lorsque l'unité de contrôle reçoit ces octets, elle les charge dans son compteur dégressif dont le contenu est ensuite diminué progressivement comme décrit plus haut.

Jusqu'ici on a montré comment l'invention permettait de transmettre deux blocs de données stockés dans la mémoire principale à une station de données éloignée. On décrira maintenant comment l'invention permet de transmettre un grand nombre N de blocs de données en n'utilisant que n zones de la mémoire principale $2 \leq n < N$. Dans l'exemple qui suit, on montrera comment transmettre N blocs en utilisant que deux zones de la mémoire principale.

Pour transmettre les N blocs de données, le programme d'application prépare cinq mots commande du canal, CCW1 à CCW5, dont les contenus sont résumés dans le tableau ci-dessous.

|  | Code de commande | Adresse des données | Bits indicateurs | Compte |
|---|---|---|---|---|
| CCW1 | Ecriture | Adresse Zone 1 | CC | Longueur Zone 1 |
| CCW2 | Comptage dégressif | ignoré | CC, SLI, PCI | 1 |
| CCW3 | Ecriture | Adresse Zone 2 | CC | Longueur Zone 2 |
| CCW4 | Comptage dégressif | ignoré | SLI, PCI | 1 |
| CCW5 | TIC | Adresse CCW1 | ignoré | ignoré |

Dans le tableau, seuls les bits indicateurs dont la valeur est 1 ont été indiqués. La commande transfert dans le canal (TIC) sert à spécifier l'adresse du prochain CCW qui doit être recherché et utilisé par le canal. Elle permet de provoquer l'exécution d'un CCW qui n'est pas situé à l'adresse de CCW qui suit immédiatement celle du CCW en cours.

On suppose que les deux premiers blocs de données à transmettre sont emmagasinés dans les zones 1 et 2 de la mémoire principale et que les autres blocs de données à transmettre sont stockés dans une unité de mémoire externe reliée au calculateur. Le programme d'application inscrit l'adresse du CCW1 dans le champ d'adresse du CAW. Le CCW1 est exécuté et le CCW2 est extrait de la mémoire principale comme décrit dans le premier mode de réalisation de l'invention.

Lorsque le CCW2 est emmagasiné dans le canal, celui-ci commence son exécution et vérifie simultanément l'état du bit indicateur PCI. Ce bit étant à 1, le canal lève la ligne Demande d'interruption 14. Lorsque le CPU lève la ligne Interruption 11, le canal emmagasine dans la mémoire principale le mot d'état du canal CSW indiquant la condition PCI. Le programme d'application détecte cette condition dans le CSW et est ainsi informé que le CCW1 a été exécuté, c'est-à-dire que le premier bloc de données a été transmis et que la zone 1 de la mémoire principale est maintenant disponible. Le programme d'application demande alors au canal qui est relié à l'unité de mémoire externe (non représentés sur la figure) de transférer le troisième bloc de données à transmettre de l'unité de mémoire à la zone 1 de la mémoire principale. Le programme d'application inscrit la longueur du troisième bloc de données dans le champ Compte du CCW1 stocké dans la mémoire principale et met à 1 le bit indicateur CC du CCW4.

Pendant ce temps, les CCW2 et CCW3 sont exécutés et le CCW4 est transféré au canal. Le canal commence l'exécution du CCW4, détecte que le bit indicateur PCI est à 1 et demande une interruption. Le programme d'application fait alors transférer le quatrième bloc de données de l'unité de mémoire externe à la zone 2 de la mémoire principale et met à jour le champ Compte du CCW4 stocké dans la mémoire principale.

Lorsque le canal a terminé l'exécution du CCW4 emmagasiné dans le canal, c'est-à-dire la transmission du deuxième bloc de données, il vérifie l'état du bit indicateur CC. Si ce bit a la valeur 0, c'est que le transfert du troisième bloc de données dans la zone 1 n'est pas terminé, et l'opération de transmission se termine. Si le bit indicateur CC du CCW4 a la valeur 1, le canal demande à la mémoire principale de lui transférer le CCW5. Dès que le canal détecte la commande Transfert dans le canal, il demande à la mémoire principale de lui transférer le CCW1 dont l'adresse est contenue dans le CCW5. Le canal exécute de nouveau le CCW1, ce qui se traduit par la transmission du troisième bloc de données, puis le CCW2 qui entraîne le transfert du cinquième bloc de données à transmettre de l'unité de mémoire externe à la zone 2 de la mémoire principale, et ainsi de suite jusqu'à ce que les N blocs de données aient été transmis. Lorsqu'on utilise n zones de la mémoire principale, on transfère le $(n+1)^{ième}$ bloc de données de l'unité de mémoire externe dans la première zone dès que celle-ci est libérée, et ainsi de suite.

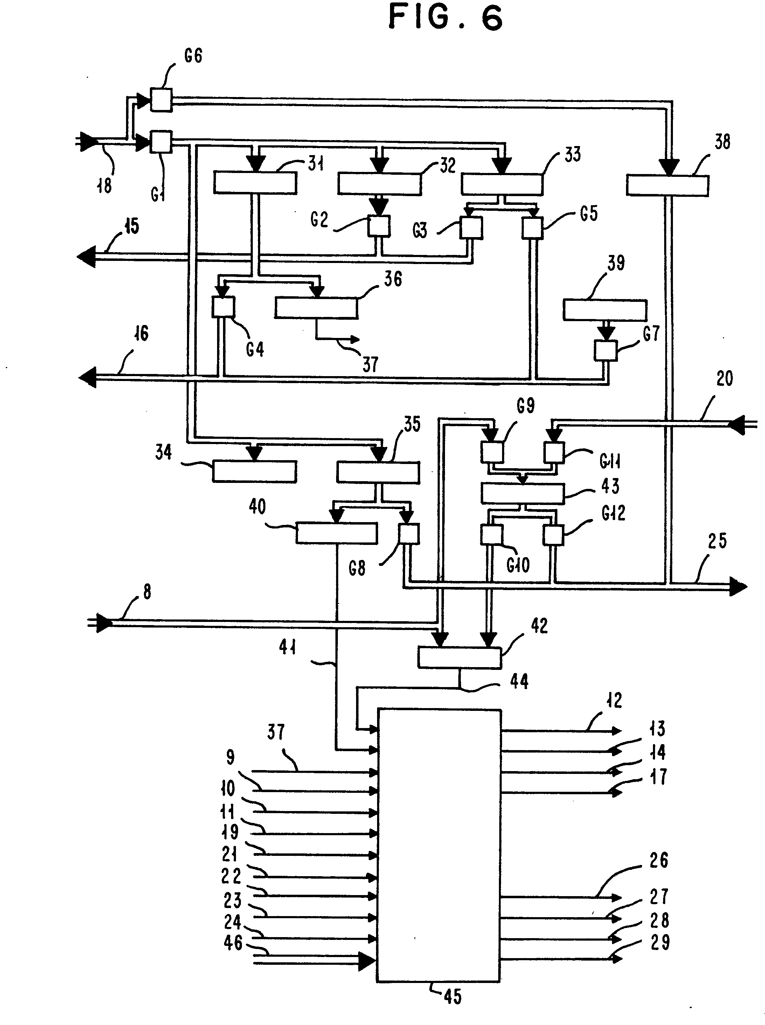

On a représenté sur la figure 6 un exemple de réalisation du canal 7 de la figure 1. Le canal illustré sur la figure 6 est une version simplifiée du canal décrit dans le brevet français No. 1 452 625 et on pourra s'y référer pour plus de détails.

Le bus de sortie des données en mémoire 18 est relié à travers une porte G1 à un registre de compte 31, un registre d'adresse de données 32, un registre d'adresse de commande 33, un registre de bits indicateurs 34 et un registre de commande 35. Les sorties des registres 32 et 33 sont reliées respectivement à travers deux portes G2 et G3 au bus d'adresse de mémoire 15. Les sorties des registres 31 et 33 sont reliées respectivement à travers des portes G4 et G5 au bus d'entrée des données en mémoire 16. La sortie du registre 31 est en outre appliquée à un décodeur 36 qui fournit un signal sur une ligne 37 lorsque le contenu du registre 31 est à la valeur zéro. Le bus 18 est en outre relié à travers une porte G6 à l'entrée d'un registre tampon de données 38 dont la sortie est reliée au bus de sortie 25. Un registre d'état du canal 39 a sa sortie reliée au bus 16 à travers une porte G7. La sortie du registre 35 est reliée à un circuit de décodage 40 qui fournit un signal sur une ligne 41 lorsque le code de commande stocké dans le registre 35 est un code d'écriture. La sortie du registre 35 est aussi reliée à travers une porte G8 au bus de sortie 25. Le bus d'adresse 8 est reliée à une entrée d'un comparateur 42 et à travers une porte G9 à l'entrée d'un registre d'adresse d'unité 43 dont la sortie est reliée à travers une porte G10 à l'autre entrée du comparateur 42. Le comparateur 42 fournit un signal de concordance sur une ligne 44 lorsque ses deux entrées sont identiques. Le registre 43 a son entrée reliée aussi à travers une porte G11 au bus d'entrée 20. La sortie du registre 43 a sa sortie reliée à travers une porte G12 au bus de sortie 25. Un circuit logique de commande 45 reçoit comme entrées les lignes 9, 10, 11, 19, 21 à 24 et 37, le contenu du registre d'état 39 par un bus 46, les lignes d'écriture 41 et de concordance 44, et les bits indicateurs stockés dans le registre 34 par des lignes non représentées. Le circuit 45 fournit comme sorties les lignes 12, 13, 14, 17, et 26 à 29 et les lignes de commande des portes G1 à G12, qui n'ont pas été représentées sur la figure.

On décrira maintenant le fonctionnement du dispositif de la figure 6 en se référant au premier mode de réalisation de l'invention dont le fonctionnement a été décrit plus haut.

0027851

Au début de l'opération de transmission par le canal, le CPU 6 lève les lignes 9 et 10 et place l'adresse d'unité sur le bus d'adresse 8. Le circuit de commande 45 détecte l'état des lignes 9 et 10 et l'état du canal qui lui est fourni par le bus 46 et si le canal est libre, place un code condition approprié, par exemple, 00, sur les lignes de condition 12 et 13 et lève la ligne de commande de la porte G9 rendant celle-ci conductrice. L'adresse d'unité sur le bus 8 est ainsi chargée dans le registre d'adresse d'unité 43 et dans un registre d'entrée (non représenté) du comparateur 42. Le circuit 45 lève alors la ligne Demande d'écriture 17, et la ligne de commande de la porte G3 plaçant ainsi l'adresse du CAW qui était contenu dans le registre d'adresse de commande 33 sur le bus d'adresse de mémoire 15. Lorsque la mémoire principale 5 lève la ligne Acceptation 19 le circuit 45 lève la ligne de commande de la porte G1 et l'adresse contenue dans le CAW, disponible sur le bus de sortie des données 18 est stockée sur le registre d'adresse de commande 33. Le circuit 45 lève alors la ligne Demande d'écriture 17 et la ligne de commande de la porte G3 et place l'adresse contenue dans le registre 33 sur le bus 15. Lorsqu'en réponse la mémoire lève la ligne Acceptation 19, le circuit 45 lève la ligne de commande de la porte G1 et les champs Code Commande, Adresse des données, Bits indicateurs et Compte du CCW1 disponible sur le bus 18 sont stockés respectivement dans les registres 35, 32, 34 et 31. Le circuit 45 lève alors les lignes Sortie d'adresse 27 et Sortie de Sélection 29 et la ligne de commande de la porte G12 plaçant ainsi l'adresse d'unité contenue dans le registre 43 sur le bus de sortie 25. Lorsque l'unité de contrôle 2 lève les lignes Entrée disponible 21 et Entrée d'adresse 22, le circuit 45 lève la ligne de commande de la porte G11 permettant à l'adresse sur le bus d'entrée 20 d'être emmagasinée dans le registre 43. Le circuit 45 lève alors la ligne de commande de la porte G10 et l'adresse d'unité fournie par l'unité de contrôle 2 est comparée avec celle fournie par le CPU et qui est disponible dans le registre d'entrée du comparateur 42. Si ces deux adresses sont identiques, le comparateur 42 lève la ligne de concordance 44. Le circuit 45 détecte l'état de la ligne 44 et lève la ligne Sortie de commande 26 et la ligne de commande de la porte G8 plaçant le code de commande sur le bus de sortie 25. Lorsque l'unité de contrôle lève la ligne Entrée d'état 23, le circuit lève la ligne de commande d'une porte non représentée et l'état sur le bus d'entrée est chargé dans le registre d'état 39. En réponse à l'état du canal dans le registre 39, le circuit 45 place le code approprié sur les lignes de condition 12 et 13. La transmission du premier bloc de données commence. Lorsque l'unité de contrôle 2 lève la ligne Entrée de service 22 le circuit de commande 45 lève la ligne Demande d'écriture 17, et la ligne de commande de la porte G2 plaçant ainsi l'adresse contenue dans le registre d'adresse de données 32 sur le bus d'adresse de mémoire 15. Lorsqu'en réponse la mémoire principale 5 lève la ligne Acceptation 19, le circuit 45 lève la ligne de commande de la porte G6, ce qui permet à l'octet demandé d'être placé sur le bus de sortie 25 à travers le registre tampon 38, accroît le contenu du registre 32 d'une unité et diminue celui du registre 31 d'une unité par des moyens non représentés et lève la ligne Sortie de service. Le transfert des autres octets du premier bloc s'effectue de façon semblable.

Lorsque le contenu du registre 31 atteint la valeur zéro, le circuit de décodage 36 lève la ligne 37 et lorsque l'unité de contrôle 2 demande un autre octet en levant la ligne Demande de service 24, le circuit 45 lève la ligne Sortie de commande 26 ce qui indique une condition d'arrêt à l'unité de contrôle. Lorsque le canal reçoit les conditions Fin sur canal et Fin sur unité, celles-ci sont stockées dans le registre d'état 39. Lorsque le circuit 45 détecte ces conditions, il vérifie l'état des bits indicateurs CC et PCI. Si le bit indicateur CC a la valeur 1, le circuit 45 transfère le contenu du registre 33 qui aura été au préalable augmenté de 8 (un CCW a une longueur de 8 octets) sur le bus d'adresse de mémoire 15. Si le bit indicateur CC a la valeur 0 ou si le bit PCI a la valeur 1, le circuit 45 lève la ligne Demande d'interruption 14. Lorsque le CPU lève la ligne interruption 11, le circuit 45 lève les lignes de commande des portes G4, G5 et G7 plaçant le contenu des registres 31, 33 et 39 sur le bus d'entrée des données en mémoire 16 pour inscription dans le CSW.

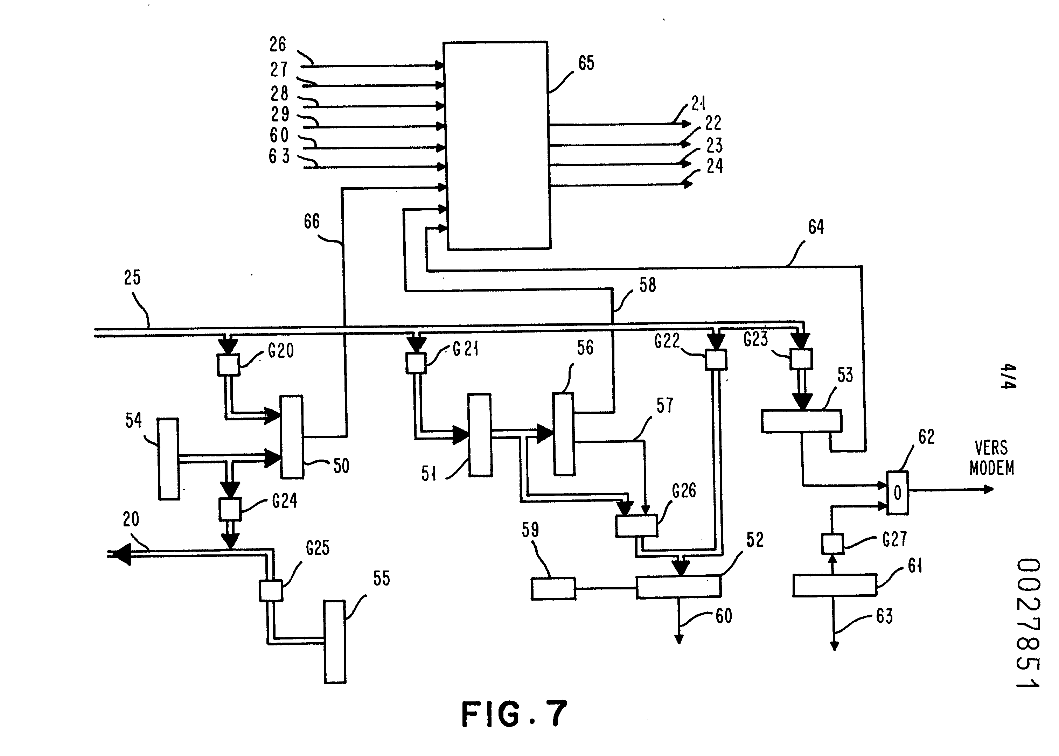

On a représenté sur la figure 7 un exemple de réalisation de l'unité de contrôle 2 de la figure 1. L'unité de contrôle illustrée sur la figure 7 est une version simplifiée de l'unité de contrôle IBM 2701, modifiée de façon à inclure l'invention. Pour plus de détails sur l'unité de contrôle IBM 2701 on pourra se référer à la documentation IBM et, par exemple, au document "Compoment Description: IBM 2701 Data Adapter Unit", référence 2701-02 No. GA 22-6864-5.

Le bus de sortie 25 du canal 7 est connecté à travers les portes G20, G21, G22 et G23 à l'une des entrées d'un comparateur 50, à un registre de commande 51, à un compteur dégressif 52 et à un registre convertisseur parallèle-série 53. Un générateur d'adresse 54 a sa sortie reliée à l'autre entrée du comparateur 50 et, à travers une porte G24 au bus d'entrée 20 du canal 7. Le bus d'entrée 20 est aussi relié à la sortie d'un registre d'état 55 à travers une porte G25. Le registre de commande 51 a sa sortie reliée à un circuit de décodage 56 qui fournit un signal sur une ligne 57 lorsque la commande est une commande Comptage dégressif du premier type et un signal sur une ligne 58 lorsque la commande est une commande Comptage dégressif du second type. La ligne 57 est appliquée à l'entrée de commande d'une porte G26 qui reçoit aussi comme entrées les six bits de plus faible poids contenus dans le registre de commande 51. La sortie de la porte G26 est reliée au compteur dégressif 52 qui reçoit des impulsions de comptage fournies par une horloge 59.

Le compteur 52 fournit un signal sur la ligne 60 lorsque son contenu atteint la valeur zéro. Un générateur de séquence 61 a sa sortie reliée à travers une porte G27 à une entrée d'une porte OU 62 dont l'autre entrée est reliée à la sortie du convertisseur parallèle-série 53. La sortie de la porte OU 62 est envoyée au modem 3 pour transmission sur la ligne de transmission 4 (figure 1). Le générateur de séquence 61 fournit un signal sur une ligne 63 lorsqu'il a terminé la génération des séquences de délimitation de trame. Le convertisseur parallèle-série 53 fournit un signal sur une ligne 64 lorsque son registre est vide. Un circuit logique de commande 65 reçoit les lignes 26 à 29, 58, 60, 63 et 64, la ligne de sortie 66 du comparateur 50 et la sortie du circuit de décodage 56. Le circuit 65 a comme sorties les lignes 21 à 24 et les lignes de commande des portes G20 à G25 et G27 non représentées.

On décrira maintenant le fonctionnement du dispositif de la figure 7 en se référant au fonctionnement de l'invention décrit plus haut.

L'unité de contrôle entre en fonction lorsque le canal 7 lève les lignes Sortie d'adresse 27 et Sortie de sélection 29 et place l'adresse d'unité sur le bus de sortie 25. Le circuit de commande 65 détecte l'état des lignes 27 et 29 et lève la ligne de commande de la porte G20 permettant à l'adresse d'unité sur le bus de sortie 25 d'être appliquée au comparateur 50 et comparée avec l'adresse d'unité générée par le dispositif 54. Si ces deux adresses sont identiques, le comparateur 50 lève la ligne 66, et en réponse le circuit 65 lève les lignes Entrée disponible 21 et Entrée d'adresse 22, et la ligne de commande de la porte G24 plaçant ainsi l'adresse d'unité générée par le dispositif 54 sur le bus d'entrée 20. Lorsque le canal 7 lève la ligne Sortie de commande 26 et place le code de commande sur le bus de sortie 25, le circuit 65 lève la ligne de commande de la porte G21, ce qui transfère le code de commande dans le registre de commande 51.

Lorsque le circuit de décodage 56 reconnaît un code de commande Ecriture il en informe le circuit de commande 65 qui lève la ligne de commande de la porte G27, et le générateur de séquence 61 génère la séquence de délimitation de trame qui est envoyé au modem par la porte OU 62. Lorsque la séquence de délimitation de trame a été envoyée, le circuit 65 lève la ligne Entrée de service 24 et la ligne de commande de la porte G23. Lorsque le canal 7 place le premier octet du bloc de données à transmettre sur le bus de sortie 25, il est emmagasiné dans le registre du convertisseur parallèle-série 53 puis envoyé vers le modem en série bit par bit au rythme de transmission des bits. Lorsque le registre du convertisseur 53 est vide, il lève la ligne 64 et le circuit 65 lève de nouveau la ligne Entrée de service 24 et la ligne de commande de la porte G23 pour la transmission du deuxième octet, et ainsi de suite. Lorsque le circuit 65 lève la ligne Entrée de service 24 et qu'en réponse le canal lève la ligne Sortie de commande 26, ce qui indique une condition d'arrêt, le circuit 65 lève la ligne de commande de la porte G27 et le générateur 61 génère les séquences de contrôle de trame et de délimitation de trame. Lorsque l'envoi de ces séquences est terminé, le circuit 65 lève la ligne Entrée d'état 23 et la ligne de commande de la porte G25, plaçant ainsi sur le bus d'entrée 20 le contenu du registre d'état 55 dans lequel les conditions Fin sur canal et Fin sur unité ont été inscrites.

Lorsque le circuit de décodage 56 reconnaît un code de commande Comptage dégressif AA AA AA 11, il lève la ligne 57 qui commande la porte G26, et les six bits A du code sont chargés dans le compteur dégressif 52. Le contenu du compteur 52 est diminué progressivement sous la commande d'impulsions fournies par l'oscillateur 59, et lorsque ce contenu atteint la valeur zéro, le compteur lève la ligne 60. Le circuit 65 détecte l'état de la ligne 60 et lève la ligne Entrée d'état 23 et la ligne de commande de la porte G25 plaçant ainsi sur le bus d'entrée 20, le contenu du registre d'état 55 dans lequel les conditions Fin sur canal, et Fin sur unité ont été inscrites.

Lorsque le circuit de décodage 56 reconnaît un code de commande Comptage dégressif du second type, il en informe le circuit 65 qui lève la ligne Entrée de service 24 et la ligne de commande de la porte G22. Lorsque le canal 7 place le premier octet définissant le nombre d'unités de temps de l'intervalle entre blocs sur le bus de sortie 25, il est chargé dans le compteur dégressif 52. Le circuit 65 lève de nouveau la ligne Entrée de service 24 pour demander l'octet suivant qui est chargé dans le compteur dégressif 52, et ainsi de suite. Lorsque le circuit 65 lève la ligne Entrée de service 24, et qu'en réponse le canal lève la ligne Sortie de commande 26, ce qui indique que tous les octets définissant le nombre d'unités de l'intervalle entre blocs ont été chargés, le contenu du compteur dégressif commence à être diminué progressivement. Lorsque le contenu du compteur atteint la valeur zéro, les conditions Fin sur canal et Fin sur unité sont transmises au canal comme vu plus haut.

Bien que l'on ait décrit dans ce qui précède et représenté sur les dessins les caractéristiques essentielles de l'invention appliquées à un mode de réalisation préféré de celle-ci, il est évident que l'homme de l'art peut y apporter toutes modifications de forme ou de détail qu'il juge utiles, sans pour autant sortir du cadre de ladite invention.

0027851

REVENDICATIONS

1. Dans un système de communication du type comprenant un calculateur qui est relié au support de transmission par une unité frontale de communication et qui transmet des blocs de données séparés entre eux par un intervalle entre blocs, un système pour contrôler la durée de l'intervalle entre blocs, caractérisé en ce qu'il comprend:

des moyens situés dans le calculateur pour envoyer un premier bloc de données à l'unité frontale,

des moyens situés dans l'unité frontale pour envoyer ledit premier bloc de données sur le support de transmission,

des moyens situés dans l'unité frontale pour envoyer au calculateur une première information indiquant que ledit premier bloc de données a été transmis,

des moyens situés dans le calculateur pour, en réponse à ladite première information, envoyer à l'unité frontale une commande indiquant la durée de l'intervalle entre blocs qui doit séparer la transmission dudit premier bloc de données de celle du bloc de données suivant,

des moyens de temporisation situés dans l'unité frontale,

des moyens situés dans l'unité frontale pour décoder ladite commande et initialiser lesdits moyens de temporisation de façon à ce qu'ils déterminent un intervalle de temps dont la durée est égale à celle indiquée par ladite commande,

des moyens situés dans l'unité frontale pour envoyer au calculateur une seconde information lorsque l'intervalle de temps déterminé par lesdits moyens de temporisation s'est écoulé, et

des moyens situés dans le calculateur pour envoyer un second bloc de données à l'unité frontale après avoir reçu ladite seconde information, afin que l'unité frontale la transmette sur le support de transmission.

2. Dans un système de communication du type comprenant un calculateur qui est relié au support de transmission par une unité frontale de communication et qui transmet N blocs de données séparés entre eux par un intervalle entre blocs, le calculateur comprenant une mémoire principale dans laquelle sont stockés respectivement dans n zones les n premiers blocs de données à transmettre, n étant un nombre entier supérieur ou égal à 2 et inférieur à N, les autres desdits N blocs de données étant stockés dans une unité de mémoire externe, un système pour contrôler la durée de l'intervalle entre blocs, caractérisé en ce qu'il comprend:

des moyens situés dans le calculateur pour transférer le premier desdits N blocs de données de la première zone de la mémoire principale à l'unité frontale,

des moyens situés dans l'unité frontale pour envoyer ledit premier bloc de données sur le support de transmission,

des moyens situés dans l'unité frontale pour envoyer au calculateur une première information indiquant que ledit premier bloc de données a été transmis,

des moyens situés dans le calculateur pour, en réponse à ladite première information, envoyer à l'unité fron-

33    0027851

tale une commande indiquant la durée de l'intervalle entre blocs qui doit séparer la transmission dudit premier bloc de données de celle du bloc de données suivant,

des moyens de temporisation situés dans l'unité frontale,

des moyens situés dans l'unité frontale pour décoder ladite commande et initialiser lesdits moyens de temporisation de façon à ce qu'ils déterminent un intervalle de temps dont la durée est égale à celle indiquée par ladite commande,

des moyens situés dans l'unité frontale pour envoyer au calculateur une seconde information lorsque l'intervalle de temps déterminé par lesdits moyens de temporisation s'est écoulé,

des moyens situés dans le calculateur pour transférer le second desdits N blocs de données de la seconde zone de la mémoire principale à l'unité frontale après avoir reçu ladite seconde information, afin que l'unité frontale la transmette sur le support de transmission, et

des moyens situés dans le calculateur pour transférer le $(n+1)^{i\grave{e}me}$ des blocs de données de l'unité de mémoire externe dans la première zone de la mémoire principale, pour transmission ultérieure, les autres desdits N blocs de données stockés dans l'unité de mémoire externe étant successivement transférés dans les zones libérés de la mémoire principale et envoyés à l'unité frontale pour transmission, de façon similaire.

3. Système selon l'une quelconque des revendications 1 à 2 dans lequel le calculateur comprend une unité centrale

34  0027851

de traitement, une mémoire principale et un canal qui relie le calculateur à l'unité frontale et qui est commandé par des mots de commande du canal, caractérisé en ce que ladite commande est incluse dans un mot de commande du canal et spécifie le nombre d'unités de temps de l'intervalle entre blocs.

4. Système selon l'une quelconque des revendications 1 et 2 dans lequel le calculateur comprend une unité centrale de traitement, une mémoire principale et un canal qui relie le calculateur à l'unité frontale et qui est commandé par des mots de commande du canal, caractérisé en ce que ladite commande est incluse dans un mot de commande du canal qui contient en outre l'adresse de la mémoire principale à laquelle se trouve stocké le nombre d'unité de temps de l'intervalle entre blocs, et en ce que le canal envoie à l'unité frontale cette commande et le nombre d'unité de temps qui provient de la mémoire principale.

FIG. 1

# FIG. 2

DEPART E/S

| CODE OP. | //////// | ADR.DU CANAL | ADR.DE L'UNITE |
|---|---|---|---|

0      7 8      15 16      23 24      31

# FIG. 3

CCW

| CODE CDE | ADRESSE DES DONNEES |
|---|---|

0      7 8                          31

| BITS INDICAT. | 000 | //////// | COMPTE |
|---|---|---|---|

32      36 37  39 40      47 48      63

# FIG.4

CAW

| CLE | 0000 | ADRESSE DE LA COMMANDE |
|---|---|---|

0    3 4    7 8                          31

# FIG.5

CSW

| CLE | 0000 | ADRESSE DE LA COMMANDE |
|---|---|---|

0    3 4    7 8                          31

| ETAT | COMPTE |
|---|---|

32                47 48                63

# FIG. 6

FIG. 7

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendication concernée | |
| | US - A - 3 714 635 (IBM)<br><br>* colonne 1, lignes 27,34,51; colonne 2, ligne 62 à colonne 5, ligne 10 et colonne 6, ligne 63 à colonne 7, ligne 45 *<br><br>---------- | 1-4 | G 06 F 15/16<br>G 06 F 13/00 |

**DOMAINES TECHNIQUES RECHERCHES (Int. Cl. 3)**

G 06 F 15/16
G 06 F 13/00

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 09.01.1981 | LEPEE |

OEB Form 1503.1  06.78